# EUROPÄISCHE PATENTSCHRIFT

(11) **EP 2 513 500 B1**
(45) Veröffentlichungstag und Bekanntmachung des Hinweises auf die Patenterteilung: **14.01.2015**
(21) Anmeldenummer: 10784734.5
(22) Anmeldetag: 11.11.2010
(51) Int. Cl.: F16C 13/02, F16C 19/55, F16C 23/10, F16C 33/58, B41F 13/20

(54) **WÄLZLAGER**
ROLLING ELEMENT BEARING
PALIER À ROULEAU

(30) Priorität: 16.12.2009 DE 102009058542
(43) Veröffentlichungstag der Anmeldung: 24.10.2012
(73) Patentinhaber: Schaeffler Technologies GmbH & Co. KG, 91074 Herzogenaurach (DE)
(72) Erfinder: KRIMPMANN, Michael, 91074 Herzogenaurach (DE); HAASLER, Markus, 01662 Meißen (DE); WALTER, Matthias, 91074 Herzogenaurach (DE); SCHWARZ, Roland, 90584 Allersberg (DE)
(86) Internationale Anmeldenummer: PCT/EP2010/067293
(87) Internationale Veröffentlichungsnummer: WO 2011/082867

(56) Entgegenhaltungen:
- DE-A1-102004 035 387
- DE-A1-102008 000 204

## Beschreibung

### Gebiet der Erfindung

Die Erfindung betrifft ein Wälzlager, insbesondere ein zwischen einer Gehäusewandung und einem Zylinder einer Druckmaschine angeordnetes Mehrringwälzlager mit zumindest einem Außenring und zumindest einem Innenring sowie dazwischen abwälzenden Wälzkörpern.

### Hintergrund der Erfindung

Aus der DE 10 2008 16 358 A1 ist ein Wälzlager in Form eines Druckmaschinenlagers bekannt, das als Mehrring-Exzenterwälzlager ausgebildet ist. Derartige Wälzlager mit oder ohne Exzenterlagerung werden zwischen Gehäusewandungen und Zylindern, beispielsweise Hauptzylindern wie Plattenzylindern, Gummizylindern, Gegendruckzylindern und dergleichen angeordnet. Zur Erzielung hoher Druckqualität ist eine genaue Ausrichtung der Zylinder zueinander und damit gegenüber der Gehäusewandung sowie eine Verwendung spielfreier oder zumindest spielarmer Wälzlager erforderlich.

Bedingt durch die Konstruktion der Druckmaschine befinden sich mehrere Bohrungen zur Aufnahme von Mehrringkugellagern relativ in naher Umgebung. Durch die Vielzahl von Einflussgrößen können die realen Reibungsmomente und Reibleistungen der Wälzlager erheblich schwanken. Trotz reibungsoptimierter Lagerungstechnik ist jedoch eine gewisse Wärmeentwicklung nicht auszuschließen. Eine unterschiedliche Wärmeverteilung aufgrund unterschiedlicher Wärmegradienten in der Gehäusewandung ist daher die Folge. Dadurch kommt es im Betrieb zu Verformungen der Wälzlagerringe und erhöhten inneren Belastungen, so dass sich die Wälzeigenschaften und die Lagerlebensdauer negativ ändern.

Aus der DE 10 2004 035 387 A1 ist ein Wälzlager bekannt, bei dem ein Außenring an einem Außenmantel eine umlaufende, wannenförmige Nut aufweist.

### Aufgabe der Erfindung

Ausgehend von den dargelegten Nachteilen des bekannten Standes der Technik liegt der Erfindung deshalb die Aufgabe zu Grunde, ein Wälzlager insbesondere für die Anwendung in Druckmaschinen vorzuschlagen, das vor dem Hintergrund einer thermischen Belastung eine verlängerte Lebensdauer aufweist.

### Beschreibung der Erfindung

Die Aufgabe wird durch den Gegenstand des Anspruchs 1 gelöst. Die Unteransprüche 2 bis 9 geben vorteilhafte Ausführungsformen des Gegenstands des Anspruchs 1 wieder. Das vorgeschlagene Wälzlager enthält zumindest einen Außenring und zumindest einen Innenring sowie dazwischen abwälzende Wälzkörper. An dem radial äußeren Außenring ist zumindest ein radial gegenüber einem Außenumfang des Außenrings erweiterter Ringteil mit einer Anlagefläche vorgesehen, der mittels eines gegenüber einer axialen Breite der Anlagefläche verminderten Stegs mit dem Außenring einteilig verbunden ist. Der zumindest eine Ringteil wird bevorzugt durch zwei axial beabstandete Ringteile gebildet, die einteilig über einen Steg mit dem Außenring verbunden sind. Dadurch wird eine Entkopplung zwischen dem Ansteigen der Steifigkeit durch thermische Verspannungen der Wälzlagerringe und der einher gehenden reduzierten Lagerlebensdauer erreicht. Eine verminderte Steifigkeit wird durch Einfedern des zumindest einen Ringteils erzielt, indem der Außenring im Bereich des Ringteils biegeelastisch ausgebildet ist.

Weiterhin wird in besonders vorteilhafter Weise mit einer vergrößerten Anlagefläche ein optimierter Wärmefluss zwischen dem Lager und der Gehäusewandung erreicht. Es hat sich dabei als vorteilhaft erwiesen, wenn ein Verhältnis einer Anlagefläche zur einer Stegquerschnittsfläche größer gleich 1,5 ist.

Gemäß einem besonders vorteilhaften Ausführungsbeispiel sind an dem Wälzlager zwei voneinander axial beabstandete Ringteile an den beiden Stirnseiten des Außenlagers vorgesehen. Auf diese Weise werden zwei voneinander axial beabstandete Aufnahmeflächen gebildet, mittels derer das Wälzlager an einer Gehäusewandung zentriert aufgenommen ist.

Dabei können die Stirnseiten des Wälzlagers plan ausgeführt sein, indem die Ringteile und die Stege jeweils eine ebene Fläche mit den Stirnseiten des Außenrings bilden. Hierbei ist zur Ausbildung des Stegs zwischen den Ringteilen und dem Außenumfang des Außenrings jeweils an den zugewandten Seiten des Ringteils ein vorzugsweise im Querschnitt gerundeter Einstich eingebracht.

Es hat sich insbesondere aus Gründen der Stabilität und einem vorteilhaften Einfederungsverfalten des Außenrings und den in diesen einteilig integrierten Ringteilen als vorteilhaft erwiesen, wenn die beiden Einstiche zueinander beispielsweise schwalbenschwanzförmig eingebracht werden, indem diese zwischen Ringteilen und dem Außenring jeweils ausgehend von einer axial mittigen Position des Außenrings nach axial außen eingebracht werden und diese einen Richtungsanteil nach radial innen aufweisen. Auf diese Weise kann bei ausreichender Steifigkeit des Steges ein elastisches Einfedern der Anlageflächen gegenüber dem Außenring erzielt werden.

Als weiterhin vorteilhaft hat sich erwiesen, wenn Stege axial außerhalb einer am Innenumfang des Außenrings vorgesehenen Laufbahn für Wälzkörper angeordnet sind. Bei einer derartigen Anordnung erfolgt eine auf den Außenring wirkende radiale Kraft axial außerhalb der Laufbahnen über den Steg, so dass Biegungen zum Einfedern der Anlagefläche im Bereich des Steges auftreten. Um eine Verformung im Bereich der Laufbahnen für die Wälzkörper gering zu halten, wird vorteilhafterweise ein tragender Querschnitt im Bereich des Steges kleiner als ein Querschnitt im Bereich der Laufbahnen vorgesehen. Beispielsweise haben sich Verhältnisse des Stegquerschnitts zum Querschnitt des Außenrings im Bereich der Laufbahn(en) als vorteilhaft erwiesen, bei denen die Stegquerschnittsfläche zwischen dem 0,2-fachen bis 0,5-fachen, vorzugsweise dem 0,3-fachen der Querschnittsfläche des Außenrings beträgt.

Das Wälzlager wird als Mehrringwälzlager insbesondere zwischen einer Gehäusewandung und einem mit diesem verdrehbar verbundenen Zylinder einer Druckmaschine angeordnet. Dabei kann zumindest ein Lagerringpaar mit zwischen diesen abwälzenden Wälzkörpern gegenüber einem anderen Lagerringpaar exzentrisch angeordnet sein.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: eine Ansicht eines Wälzlagers in Form eines Mehrring-Exzenterwälzlagers für eine Druckmaschine,
- Figur 2: einen Schnitt durch den Außenring des Wälzlagers der Figur 1,
- Figur 3: eine geschnittene Teilansicht des Außenrings des Wälzlagers der Figur 1.

### Ausführliche Beschreibung der Zeichnungen

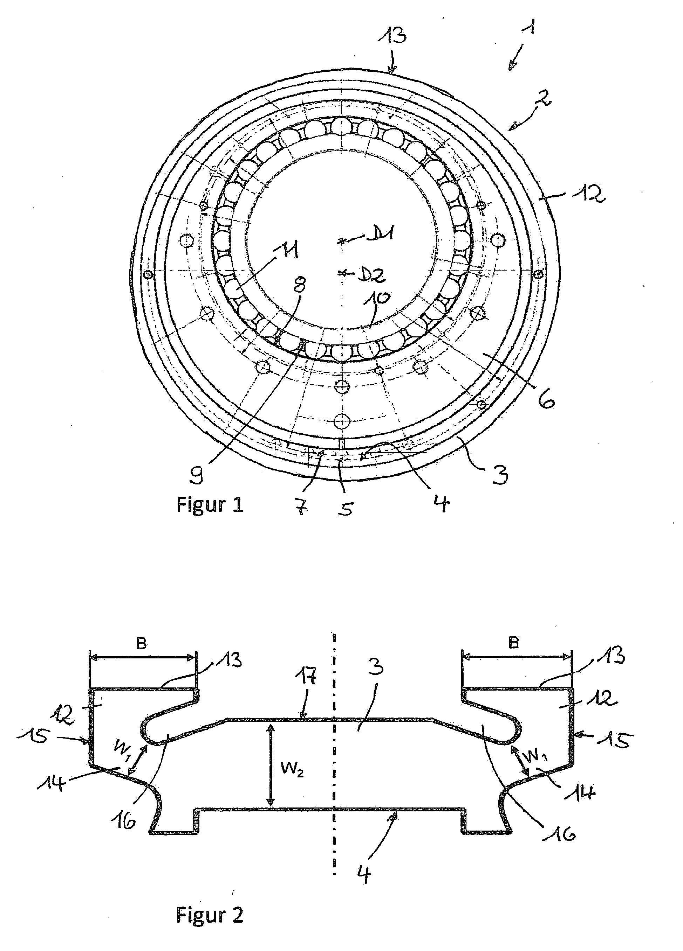

Figur 1 zeigt eine Ansicht des Wälzlagers 1, das als Mehrring-Exzenterwälzlager 2 ausgebildet ist. Der Außenring 3 ist rotationssymmetrisch zur Drehachse D2 angeordnet und weist an seinem Innenumfang die Laufbahn 4 für die radial außen angeordneten Wälzkörper 5, beispielsweise Zylinderrollen auf. Der Zwischenring 6 weist an seinem Außenumfang die zu der Laufbahn 4 komplementäre Laufbahn 7 für die Wälzkörper 5 und an seinem Innenumfang die rotationssymmetrisch zu der Drehachse D1, die parallel und radial versetzt zu der Drehachse D2 angeordnet ist, angeordnete Laufbahn 8 auf, zwischen der und der Laufbahn 9 des Innenrings 10 die radial inneren Wälzkörper 11 abwälzen. Das Wälzlager 1 ist mit seinem Außenring 3 in einer Gehäusewandung einer Druckmaschine aufgenommen und weist hierzu zwei axial beabstandete Ringteile 12 mit den Anlageflächen 13 auf.

Figur 2 zeigt den Außenring 3 im Teilschnitt mit der Laufbahn 4 und den Ringteilen 12, die radial außen die Anlageflächen 13 aufweisen. Die Ringteile 12 sind mittels der Stege 14 einteilig mit dem Außenring 3 verbunden, die eine Schmalstelle zwischen den Ringteilen 12 und dem Außenring 3 bilden, an der die Steifigkeit der Anbindung des Außenrings 3 zu der Gehäusewandung oder einem anderen Aufnahmebauteil verringert wird, so dass zwischen dem Außenring 3 und diesen eine geringe Elastizität gegeben ist. Die verrundeten Stege 14 und die Ringteile 12 sind mit den Stirnseiten 15 des Außenrings 3 plan ausgebildet. Die Verengung der Stege 14 gegenüber den Ringteilen 12 erfolgt mittels von einer axial mittigen Position des Außenrings nach axial außen geführten Einstichen 16, die anteilig nach radial innen ausgeführt sind.

Die Stege 14 sind gegenüberliegend axial außerhalb der Laufbahn 4 angeordnet, so dass die Einwirkung von über die Laufbahn 4 eingetragenen Druckkräften auf die Stege 14, die mit einer geringen elastischen Verlagerung oder Verschwenkung der Stege 14 verbunden sein können, ohne wesentlichen Einfluss auf die Laufbahngeometrie der Laufbahn 4 und die Abrollqualität der Wälzkörper 5 (Figur 1) auf diesen bleibt.

Im Weiteren sind die entlang des Umfangs ausgebildeten Stegquerschnittsflächen W₁ der Stege 14 kleiner als die entlang des Umfangs geschnittene Querschnittsfläche W₂ des Außenrings 3 zwischen der Laufbahn 4 und dessen Außenumfang 17 ausgebildet, die beispielsweise gegenüber der Stegquerschnittsfläche W₁ eine 1,5-fache Querschnittsfläche W₂ aufweist.

Die Stegquerschnittsfläche W₁ ist zudem infolge der Einstiche 16 wesentlich geringer als die Fläche der Anlageflächen 13 mit der axialen Breits B. Als bevorzugter Wert hat sich das Verhältnis der Anlageflächen 13 zu der Stegquerschnittsfläche W₁ größer gleich 1,5 als vorteilhaft erwiesen.

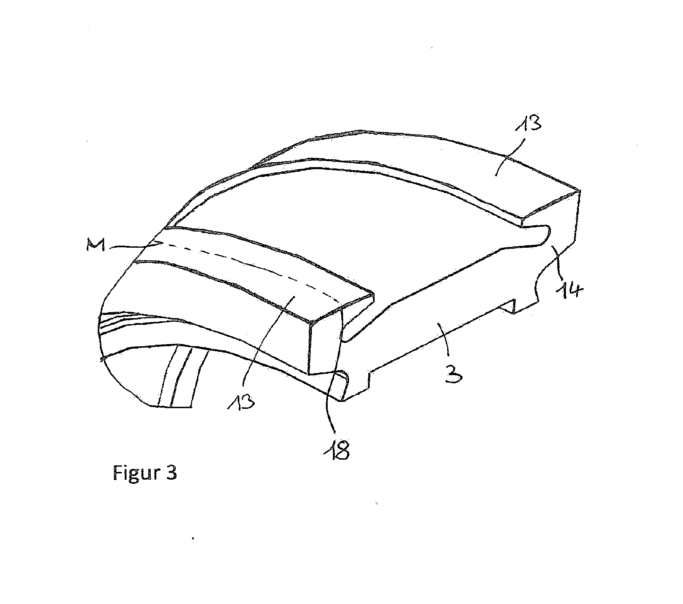

Figur 3 zeigt den Außenring 3 in geschnittener Teilansicht. Die Anlageflächen 13 zeigen im Querschnitt zur Verbindung mit der nicht dargestellten Gehäusewandung eine im Wesentlichen plane und entgratete Oberfläche 18, so dass der Außenring 3 und damit das Wälzlager 1 der Figur 1 vereinfacht ohne Grate und spitze Kanten montiert werden kann. Die auf den Stegen 14 aufgesetzten Auflageflächen 13 werden dabei über den ringförmig über den Umfang vorzugsweise axial mittig verlaufenden Bereich M aufgrund deren spezifischer Geometrie mit den höchsten Druckkräften beaufschlagt.

### Bezugszeichen liste

- 1: Wälzlager
- 2: Mehrring-Exzenterwälzlager
- 3: Außenring
- 4: Laufbahn
- 5: Wälzkörper
- 6: Zwischenring
- 7: Laufbahn
- 8: Laufbahn
- 9: Laufbahn
- 10: Innenring
- 11: Wälzkörper
- 12: Ringteil
- 13: Anlagefläche
- 14: Steg
- 15: Stirnseite
- 16: Einstich
- 17: Außenumfang
- 18: Oberfläche
- B: Breite
- D1: Drehachse
- D2: Drehachse
- M: Bereich
- W₁: Stegquerschnittsfläche
- W₂: Querschnittsfläche (im Bereich der Laufbahn 4)

## Patentansprüche

1. Wälzlager (1) mit zumindest einem Außenring (3) und zumindest einem Innenring (10) sowie dazwischen abwälzenden Wälzkörpern (5, **11),**
wobei an dem Außenring (3) zumindest ein radial gegenüber einem Außenumfang (17) des Außenringes (3) erweiterter Ringteil (12) mit einer Anlagefläche (13) vorgesehen ist, **dadurch gekennzeichnet, dass** der Ringteil (12) mittels eines axial innerhalb einer axialen Breite (B) der Anlagefläche (13) angeordneten Stegs (14) mit dem Außenring (3) einteilig verbunden ist.

2. Wälzlager (1) nach Anspruch 1, **dadurch gekennzeichnet, dass** ein Verhältnis der Anlagefläche (13) zu einer über den Umfang des Stegs (14) verlaufenden Stegquerschnittsfläche (W₁) des Stegs (14) größer gleich 1,5 ist.

3. Wälzlager (1) nach Anspruch 1 oder 2, **dadurch gekennzeichnet, dass** zwei voneinander axial beabstandete Ringteile (12) an den beiden Stirnseiten (15) des Außenrings (3) angeordnet sind.

4. Wälzlager (1) nach Anspruch 3, **dadurch gekennzeichnet, dass** die Ringteile (12) und die Stege (14) jeweils eine ebene Fläche mit den Stirnseiten (15) des Außenrings (3) bilden.

5. Wälzlager (1) Anspruch 4, **dadurch gekennzeichnet, dass** zwischen Ringteilen (12) und Außenring (3) ein jeweils von der axialen Mitte des Außenrings (3) nach axial außen und nach radial innen gerichteter Einstich (16) vorgesehen ist.

6. Wälzlager (1) nach einem der Ansprüche 3 bis 5, **dadurch gekennzeichnet, dass** die Stege (14) axial außerhalb einer am Innenumfang des Außenrings (3) vorgesehenen Laufbahn (4) für Wälzkörper (5) angeordnet sind.

7. Wälzlager (1) nach einem der Ansprüche 1 bis 6, **dadurch gekennzeichnet, dass** die Stegquerschnittsfläche (W₁) des Stegs (14) kleiner als eine
über den Umfang geschnittene Querschnittsfläche (W₂) des Außenrings (3) zwischen der Laufbahn (4) und dem Außenumfang (17) ist.

8. Wälzlager (1) nach Anspruch 7, **dadurch gekennzeichnet, dass** die Stegquerschnittsfläche (W₁) zwischen dem 0,2-fachen bis 0,5-fachen, vorzugsweise dem 0,3-fachen der Querschnittsfläche (W₂) des Außenrings ist.

9. Wälzlager (1) nach einem der Ansprüche 1 bis 8, **dadurch gekennzeichnet, dass** das Wälzlager (1) ein zwischen einer Gehäusewandung und einem mit diesem verdrehbar verbundenen Zylinder angeordnetes Mehrringwälzlager einer Druckmaschine ist.

## Claims

1. Rolling bearing (1), with at least one outer ring (3) and at least one inner ring (10) and with rolling bodies (5, 11) rolling between them, there being provided on the outer ring (3) at least one ring part (12) widened radially with respect to an outer circumference (17) of the outer ring (3) and having a bearing surface (13), **characterized in that** the ring part (12) is connected in one part to the outer ring (3) by means of a web (14) arranged axially within an axial width (B) of the bearing surface (13).

2. Rolling bearing (1) according to Claim 1, **characterized in that** a ratio of the bearing surface (13) to a web cross-sectional surface (W₁) of the web (14), the said web cross-sectional surface running over the circumference of the web (14), is greater than or equal to 1.5.

3. Rolling bearing (1) according to Claim 1 or 2, **characterized in that** two ring parts (12) spaced apart from one another axially are arranged on the two end faces (15) of the outer ring (3).

4. Rolling bearing (1) according to Claim 3, **characterized in that** the ring parts (12) and the webs (14) form in each case a planar surface with the end faces (15) of the outer ring (3).

5. Rolling bearing (1) according to Claim 4 **characterized in that** a recess (16) directed axially outwards and radially inwards from the axial centre of the outer ring (3) in each case is provided between the ring parts (12) and outer ring (3).

6. Rolling bearing (1) according to one of Claims 3 to 5, **characterized in that** the webs (14) are arranged axially outside a raceway (4) for rolling bodies (5) which is provided on the inner circumference of the outer ring (3).

7. Rolling bearing (1) according to one of Claims 1 to 6, **characterized in that** the web cross-sectional surface (W₁) of the web (14) is smaller than a cross-sectional surface (W₂), taken over the circumference, of the outer ring (3) between the raceway (4) and the outer circumference (17).

8. Rolling body (1) according to Claim 7, **characterized in that** the web cross-sectional surface (W₁) is between 0.2 times and 0.5 times, preferably 0.3 times, the cross-sectional surface (W₂) of the outer ring.

9. Rolling bearing (1) according to one of Claims 1 to 8, **characterized in that** the rolling bearing (1) is a multiple-ring rolling bearing of a printing machine, the said multiple-ring rolling bearing being arranged between a housing wall and a cylinder connected rotatably to the latter.

## Revendications

1. Palier à roulement (1) comprenant au moins une bague extérieure (3) et au moins une bague intérieure (10) ainsi que des corps de roulement (5, 11) roulant entre celles-ci, au moins une partie annulaire (12) élargie radialement par rapport à une périphérie extérieure (17) de la bague extérieure (3) et dotée d'une surface d'appui (13) étant prévue sur la bague extérieure (3), **caractérisé en ce que** la partie annulaire (12) est reliée d'un seul tenant à la bague extérieure (3) au moyen d'un élément de liaison (14) disposé axialement à l'intérieur d'une largeur axiale (B) de la surface d'appui (13).

2. Palier à roulement (1) selon la revendication 1, **caractérisé en ce qu'**un rapport de la surface d'appui (13) à une surface en section transversale (W₁) de l'élément de liaison (14) s'étendant sur la périphérie de l'élément de liaison (14) est supérieur ou égal à 1,5.

3. Palier à roulement (1) selon la revendication 1 ou 2, **caractérisé en ce que** deux parties annulaires (12) espacées axialement l'une de l'autre sont disposées sur les deux côtés frontaux (15) de la bague extérieure (3).

4. Palier à roulement (1) selon la revendication 3, **caractérisé en ce que** les parties annulaires (12) et les éléments de liaison (14) forment respectivement une surface plane avec les côtés frontaux (15) de la bague extérieure (3).

5. Palier à roulement (1) selon la revendication 4, **caractérisé en ce qu'**une gorge (16) orientée respectivement axialement vers l'extérieur et radicalement vers l'intérieur à partir du centre axial de la bague extérieure (3) est prévue entre les parties annulaires (12) et la bague extérieure (3).

6. Palier à roulement (1) selon l'une quelconque des revendications 3 à 5, **caractérisé en ce que** les éléments de liaison (14) sont disposés axialement à l'extérieur d'un chemin de roulement (4) pour des corps de roulement (5) prévu sur la périphérie intérieure de la bague extérieure (3).

7. Palier à roulement (1) selon l'une quelconque des revendications 1 à 6, **caractérisé en ce que** la surface en section transversale (W₁) de l'élément de liaison (14) est inférieure à une surface en section transversale (W₂), en coupe sur la périphérie, de la bague extérieure (3) entre le chemin de roulement (4) et la périphérie extérieure (17).

8. Palier à roulement (1) selon la revendication 7, **caractérisé en ce que** la surface en section transversale de l'élément de liaison (W₁) vaut 0,2 fois à 0,5 fois, de préférence 0,3 fois, la surface en section transversale (W₂) de la bague extérieure.

9. Palier à roulement (1) selon l'une quelconque des revendications 1 à 8, **caractérisé en ce que** le palier à roulement (1) est un palier à roulement à plusieurs bagues d'une machine à imprimer, lequel est disposé entre une paroi de boîtier et un cylindre relié de manière pivotante à celui-ci.
